Europäisches Patentamt

European Patent Office

Office européen des brevets

(11) Veröffentlichungsnummer: **0 257 117**
**A1**

## (12) EUROPÄISCHE PATENTANMELDUNG

(21) Anmeldenummer: 86111626.7

(22) Anmeldetag: 22.08.86

(51) Int. Cl.⁴: **B27N 3/14 , G01G 11/08**

(43) Veröffentlichungstag der Anmeldung:
02.03.88 Patentblatt 88/09

(84) Benannte Vertragsstaaten:
AT BE CH DE FR GB IT LI LU NL SE

(71) Anmelder: **CARL SCHENCK AG**
**Landwehrstrasse 55 Postfach 40 18**
**D-6100 Darmstadt(DE)**

(72) Erfinder: **Haury, Bernd**
**Weingartenstrasse 7**
**D-6100 Darmstadt 13(DE)**

(74) Vertreter: **Dallhammer, Herbert, Dipl.-Ing.**
**CARL SCHENCK AG Patentabteilung**
**Postfach 4018 Landwehrstrasse 55**
**D-6100 Darmstadt(DE)**

(54) **Vorrichtung zum Wiegen von Schüttgut aus Bunkern im Zuge der Herstellung von Spanplatten.**

(57) Bei der Herstellung von Spanplatten aus Schzüttgut, welches über Eintragsschnecken (3) Dosierbunker (1,2,1',2') und Streuköpfe (8) auf eine darunter befindliche Formungseinrichtung, wie flexible Unterlagen (5) aufgebracht wird, wird zum Zwecke den Einfluß der Unterlagen bei der Gewichtsbestimmung des hergestellten Spänevlieses auszuschalten, jeder Dosierbunker über Wägezellen (7) abgestützt, während die mit dem Dosierbunker zusammenwirkenden Eintragsschnecken für den Dosierbunker unabhängig von diesem gelagert sind.

EP 0 257 117 A1

## Vorrichtung zum Wiegen von Schüttgut aus Bunkern im Zuge der Herstellung von Spanplatten

Die Erfindung betrifft eine Vorrichtung zum Wiegen von Schüttgut aus Bunkern im Zuge der Herstellung von Spanplatten mit Eintragsschnecken, Dosierbunken und Streuköpfen.

Durch die DE-PS 25 57 352 ist ein Durchlaufverfahren zum kontinuierlichen Streuen eines gewichtskontrollierten Vlieses bekannt geworden, bei dem auf mindestens einer Kraftmeßdose an zwei Stützen gelagerte Platten abgestützt sind, über welche eine endlose oder mehrere unterteilte, das Vlies tragende Unterlagen geführt werden. Hiermit wurde im Zuge der Herstellung von Spanplatten aus Dosierbunkern ausgetragenes Gut, welches über Streuköpfe auf die Unterlagen aufgestreut wurde, kontinuierlich verwogen und es konnte hiermit eine gravimetrische Überwachung der Herstellung von Spanplatten durchgeführt werden. In das Wägeergebnis geht jedoch auch der Verschmutzungsgrad des über die Platten transportierten flexiblen Vliesträgers ein. Derartige Einflüsse wurden durch entsprechende Zusatzwertungen in der Wägeeinrichtung berücksichtigt.

Um den Einfluß derartiger Zusatzinformationen, die nicht kontinuierlich der Wägeeinrichtung zugegeben werden, zu vermeiden und somit eine Steigerung der Gewichtskonstanz der fertigen Spanplatten zu erreichen, liegt der vorliegenden Erfindung die Aufgabe zugrunde, jede einzelne Streustation in einer Herstellungsanlage für Spanplatten kontinuierlich und ohne Totzeiten zu überwachen. Die Lösung dieser Aufgabe wird mit den kennzeichnenden Merkmalen des Anspruchs erreicht. Zufolge unabhängiger Lagerung der Eintragsschnecke vom Dosierbunker und Abstützen jedes einzelnen Dosier bunkers auf Wägezellen wird das auszutragende Spangut bereits beim Verlassen des Dosierbunkers gemessen und es können Fehler durch Verschleiß oder Verschmutzung der Vliesträger, welche bevorzugt als flexible Unterlagen ausgebildet sind, nicht die gravimetrische Überwachung, die Herstellung eines Spänevlieses, beeinflussen. Durch die Erfindung ist es somit möglich, die aus dem Dosierbunker für Deckschichtspäne austretende Masse genau zu bestimmen im nachfolgenden Dosierbunker für Mittelschichtspäne, ebenfalls die genaue Menge an zu streuendem Material festzustellen und die aus einem weiteren Dosierbunker auszutragende weitere Deckschichtmenge entsprechend der vorgegebenen konstanten Gewichtsgröße einzuregeln. Zufolge der erfindungsgemäßen Abschaltung der Wägezellen während des Füllvorgangs des Dosierbunkers durch die Eintragsschnecke werden auch Schwingungen, die zu einem Verfälschen des Meßergebnisses führen könnten, ausgeschlossen. Während des Füllvorganges wird die aus dem Dosierbunker austretende Spänemenge als konstante Austragsmenge in ihrem Gewicht betrachtet.

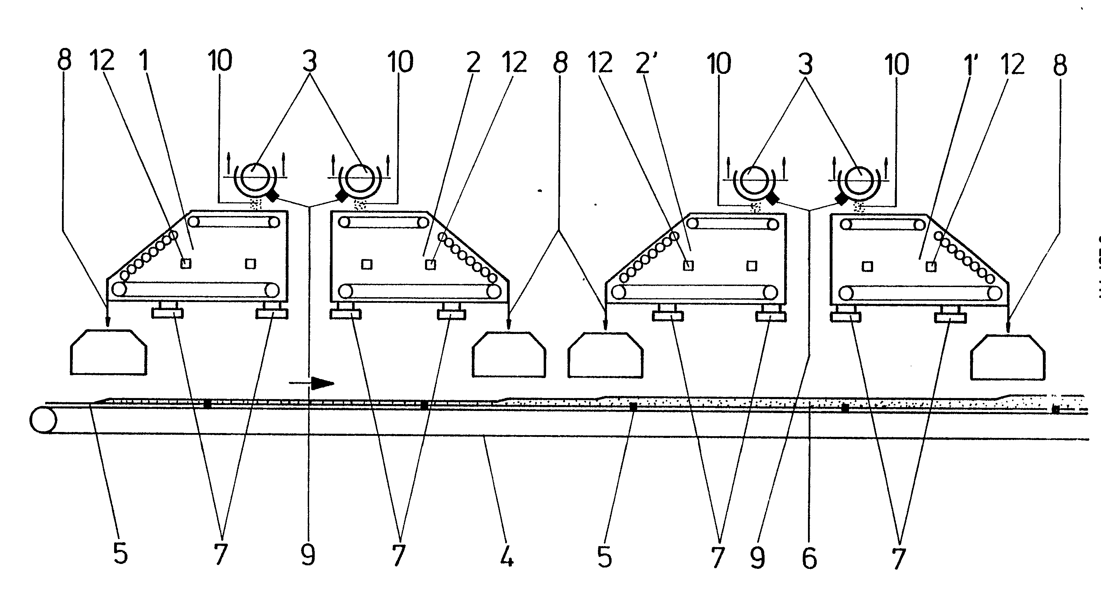

In der nachfolgenden Zeichnung wird die Erfindung näher erläutert. Die Figur zeigt einen Herstellungsstrang für Spanplatten, bei dem zwei Deckschichtstreuanlagen und zwei Mittelschichtstreuanlagen vorgesehen sind. Anstelle der dort dargestellten vier Eintragsschnecken, können für die beiden Deckschichten eine diskontinuierlich wirkende Eintragsschnecke und für die Mittelschicht ebenfalls eine diskontinuierlich arbeitende Eintragsschnecke vorgesehen sein.

Über einem Formband 4, welches in Pfeilrichtung umläuft und das flexible Unterlagen 5 trägt, ist ein erster Dosierbunker 1 für Deckschichtmaterial für ein Spänevlies angeordnet. Anschließend an diesen folgt ein zweiter Dosierbunker 2, der für einen Teil des aufzubringenden Mittelschichtgutes vorgesehen ist, anschließend ein dritter Dosierbunker 2', der für weiteres Mittelschichtgut vorgesehen ist und den Abschluß der Vliesherstellunganlage bildet ein vierter Dosierbunker 1', der wiederum Deckschichtmaterial aud das bereits entstandene Teilvlies ablegt, so daß ein komplettes Spänevlies 6 die Vliesherstellungsanlage insgesamt verläßt.

Jeder Dosierbunker 1 bzw. 2 bzw. 2' bzw. 1' stützt sich auf mehreren Wägezellen 7 ab. Die Wägezellen sind untereinander austauschbar, so daß auch dieselben Bezugszeichen gerechtfertigt sind. Werden nunmehr die Dosierbunker 1, 2, 2' und 1' über Auslässe 8 in Richtung auf die lückenlos aufeinanderfolgenden Unterlagen 5 entleert, so zeigen die Wägezellen 7 kontinuierlich die Austragsmenge des auszutragenden Gutes an. Es kann sich hierbei um Strands, Späne oder Fasern handeln oder aus einem Gemisch dieser Materialien; auch ist es möglich, Kunststoffteile in Form von Partikeln auszutragen.

Nachdem ein gewisser Teil des zu streuenden Materials die Auslässe verlassen hat, werden durch Endschalter 9 die Informationen aus den Wägezellen 7 unterbrochen und es wird ohne Wiegen weiter Material durch die Auslässe 8 gestreut. Während dieses Zeitraums wird über die Eintragsschnecke 3 neues Material 10 in die entsprechenden Doiserbunker 1 bzw. 2 bzw. 2' bzw. 1' eingegeben. Dies zeigt ebenfalls der jeweilige Endschalter an und gibt nach einer weiteren Verzögerungszeit, in der durch das Eintragen evtl. auftretende Schwingungen abgeklungen sind, die Wägezellen 7 sum kontinuierlichen Messen wieder frei. Melder 12 sind zur Überwachung des Füllstandes in den Dosierbunkern so angeordnet, daß ein konstanter Druck gegen die Auslässe 8 gewährleistet ist. Ein Fülltakt durch die Eintragsschnecke 3 in den Dosierbunker beträgt etwa 10 - 15 Sekunden.

Die jeweilige Eintragsschnecke 3 ist hierbei unabhängig vom jeweiligen Dosierbunker gelagert, wie es in der Zeichnung durch vertikal nach oben weisende Pfeile angegeben ist.

## Ansprüche

Vorrichtung zum Wiegen von Schüttgut im Zuge der Herstellung von Spanplatten mit Eintragsschnecken, Dosierbunkern und Streuköpfen, dadurch gekennzeichnet, daß

a) die Eintragsschnecke (3) unabhängig vom Dosierbunker (1 bzw. 2 bzw. 2' bzw. 1') gelagert ist

b) die Eintragsschnecke (3) diskontinuierlich das Spangut (10) in den Dosierbunker (1 bzw. 2 bzw. 2' bzw. 1') abwirft

c) der Dosierbunker (1 bzw. 2 bzw. 2' bzw. 1') auf Wägezellen (7) abgestützt ist

d) die Masse des ausgetragenen Spangutes (10) durch Gewichtsabnahme an den Wägezellen (7) festgestellt wird

e) die Wirkungsweise der Wägezellen (7) während des Füllvorgangs ausgeschaltet wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 384 246 (RHONE-POULENC) <br> * Insgesamt * <br><br> --- | 1 | B 27 N 3/14 <br> G 01 G 11/08 |
| X | INSTRUMENTS & CONTROL SYSTEMS, Band 51, Nr. 8, August 1978, Seiten 29-35; H. HALL: "What's going on in weighing?" <br> * Seite 34; Figur 8 * <br><br> --- | 1 | |
| A | DE-A-2 535 382 (SIEMPELKAMP) <br> * Seite 5, Zeile 15 - Seite 6, Zeile 19 * <br><br> ----- | 1 | |

| | RECHERCHIERTE SACHGEBIETE (Int. Cl.4) |
|---|---|
| | B 27 N <br> G 01 G |

Der vorliegende Recherchenbericht wurde für alle Patentansprüche erstellt.

| Recherchenort | Abschlußdatum der Recherche | Prüfer |
|---|---|---|
| DEN HAAG | 08-04-1987 | RIS M. |